Europäisches Patentamt

European Patent Office

Office européen des brevets

(11) Veröffentlichungsnummer: **0 524 550 B1**

## EUROPÄISCHE PATENTSCHRIFT

(45) Veröffentlichungstag der Patentschrift: **26.04.95**

(51) Int. Cl.6: **G01L 13/02**, G01L 13/06, G01L 9/12

(21) Anmeldenummer: **92112193.5**

(22) Anmeldetag: **17.07.92**

(54) **Gasgefüllter Relativdrucksensor.**

(30) Priorität: **25.07.91 DE 4124662**

(43) Veröffentlichungstag der Anmeldung:
**27.01.93 Patentblatt 93/04**

(45) Bekanntmachung des Hinweises auf die
Patenterteilung:
**26.04.95 Patentblatt 95/17**

(84) Benannte Vertragsstaaten:
**DE**

(56) Entgegenhaltungen:
**EP-A- 0 111 348**     **EP-A- 0 373 536**
**EP-A- 0 376 631**     **DE-A- 2 943 800**
**DE-A- 3 003 111**     **DE-A- 3 321 580**

(73) Patentinhaber: **Fibronix Sensoren GmbH**
**Werftstrasse 208**
**D-24143 Kiel (DE)**

(72) Erfinder: **Orlowski, Reiner, Prof. Dr.**
**Grillenweg 12**
**W-2400 Lübeck (DE)**

(74) Vertreter: **Patentanwälte Westphal, Buchner,**
**Mussgnug Neunert, Göhring**
**Waldstrasse 33**
**D-78048 Villingen-Schwenningen (DE)**

# EP 0 524 550 B1

**Beschreibung**

Gegenstand der Erfindung ist ein Relativdrucksensor der im Oberbegriff des Anspruches 1 angegebenen Art.

Ein Relativdrucksensor dient der Messung des Druckes in einem gasförmigen oder flüssigen Prozeßmedium in bezug zum Druck, dem Referenzdruck, in einem anderen Medium, dem Referenzmedium. Als Referenzmedium wird häufig die umgebende atmosphärische Luft verwendet, so daß der atmosphärische Druck der Referenzdruck ist. Mit einer derartigen Anordnung läßt sich der Relativdruck, nämlich die Differenz zwischen dem Prozeßdruck und dem Referenzdruck, messen.

Zur Relativdruckmessung kann z.B. ein Differenzdrucksensor der Art verwendet werden, wie er in EP 0 111 348 B1 beschrieben ist. Dieser nach dem Einkammerprinzip aufgebaute Differenzdrucksensor weist zwei druckempfindliche Membranen auf, welche mit Hilfe von Abstandsringen beidseitig einer Grundplatte befestigt sind und die zwei Meßkammern begrenzen, welche über eine Querbohrung in der Grundplatte miteinander verbunden sind. Da die Kammern und die Querbohrung mit einer inkompressiblen Flüssigkeit gefüllt sind, sind die Membranbewegungen starr miteinander gekoppelt. Bestimmungsgemäß wirkt auf eine der beiden Membranen von außen der Prozeßdruck und auf die andere Membran der Referenzdruck. Bedingt durch die hydraulische Koppelung der Membranen wirkt nur der Relativdruck als Druckdifferenz auf die beiden sich gegensinnig bewegenden Membranen. Die Auslenkungen beider Membranen werden jeweils gesondert mittels eines kapazitiven Wandlers in eine elektrische Meßgröße umgewandelt, welche in einer nachfolgenden elektronischen Schaltung zu einer elektrischen Meßgröße umgewandelt werden, welche dem Relativdruck proportional ist. Vorteil des Differenzdrucksensors ist, daß dieser nach außen hin vollständig gekapselt ist, so daß keinerlei Verunreinigungen in die Meßkammern und damit in die Bereiche der empfindlichen kapazitiven Meßwandler gelangen können. Nachteilig ist bei diesen Differenzdrucksensoren die starke mechanische Belastung der Membranen bei Temperaturerhöhungen, da die Volumensvergrößerung der Ölfüllung wegen Inkompressibilität des Fluids von den Membranen vollständig ausgeglichen werden muß. Dies wirkt sich besonders nachteilig bei einseitiger Belastung einer Membran aus, da in diesem Fall die andere Membran die gesamte Volumensänderung durch Auslenkung aufnehmen muß. Ein weiterer Nachteil ist, daß derartige Differenzdrucksensoren wegen der starr miteinander gekoppelten Membranen kleine Relativdrucke nur ungenau messen können.

Diesen Nachteil hat eine andere Anordnung zur Relativdruckmessung nicht, bei welcher zwei einzelne Absolutdrucksensoren zur Messung des prozeßdruckes einerseits und zur Messung des Referenzdruckes andererseits verwendet werden, deren Meßgrößen zur Berechnung des Relativdruckes über eine elektronische Schaltung miteinander verknüpft werden. Bei einem Absolutdrucksensor ist die Meßkammer mit dem in dieser angeordneten Meßwandler evakuiert, so daß die Membran nur durch den absoluten Wert des außen anliegenden Druckes ausgelenkt wird. Bei dieser Anordnung können sich wegen der Trennung der beiden Sensoren bei unterschiedlichen Temperatureinflüssen Meßfehler einstellen.

Derartige Meßfehler können bei Relativdrucksensoren nicht entstehen, die in der Regel zur Messung des Relativdruckes in gasförmigen Medien eingesetzt werden. Bei den bekannten Relativdrucksensoren ist die druckdetektierende Membran Bestandteil einer hinter dieser im Sensorinneren angeordneten Meßkammer, die das eigentliche Meßsystem enthält. In diese Meßkammer wird das unter Referenzdruck stehende Referenzmedium geleitet, so daß auf die Membran von außen der Prozeßdruck und von innen der Referenzdruck wirkt. Ein derartiger Relativdrucksensor ist beispielsweise aus EP 0 373 536 A2 bekannt. Die Membranauslenkung, welche der Druckdifferenz zwischen prozeßdruck und Referenzdruck proportional ist, wird mittels eines kapazitiven Wandlers in eine elektrische Meßgröße umgewandelt, welche in einer nachgeschalteten elektronischen Schaltung in ein entsprechendes proportionales elektrisches Meßsignal umgeformt wird.

Aus DE 39 12 280 A1 ist gleichfalls ein Relativdrucksensor bekannt, bei welchem ein ohmscher Meßwandler in Form von Dehnungsmeßstreifen vorgesehen ist, welche die mechanischen Spannungen der Membran erfassen. Auch bei diesem Sensor muß das den Referenzdruck erzeugende Referenzmedium über eine Öffnung in eine Meßkammer hinter der Membran in das Sensorinnere geführt werden und kommt mit den in Form von Widerstandsbelägen auf der Membran aufgebrachten Dehnungsmeßstreifen in Berührung.

Die beiden oben erläuterten Relativdrucksensoren haben also gemeinsam den Nachteil, daß die Membran und insbesondere die mit der Membran verbundenen empfindlichen Meßwandler, wie z.B. Kondensatorbeläge oder Dehnungsmeßstreifen, mit den Referenzdruck führenden Medien in Kontakt gelangen. Bei den meisten Anwendungen im Bereich der industriellen Druckmeßtechnik ist aber dieses Referenzmedium problematisch. Wird, was häufig der Fall ist, der Druck in der umgebenden Atmosphäre als Referenz verwendet, dann gelangen mit der atmosphärischen Luft Feuchtigkeit, Schadgase und Staub in

2

die Meßkammer und verfälschen das Meßergebnis der Meßwandler, was sich insbesondere nachteilig auf die Langzeitstabilität des Sensors auswirkt. Noch problematischer ist es, wenn als Referenzmedium eine Flüssigkeit verwendet wird, mit welcher die meßtechnischen Eigenschaften der Meßwandler z.B. wegen Veränderung der Dielektrizitätskonstanten oder der Leitfähigkeit beeinflußt werden.

Weiterhin ist es bekannt zwei Einzelsensoren in einem dichten Gehäuse anzvordnen: DE-A1-3 003 111 Figur 3 und EP-A1-376 631 Figur 1.

Der vorliegenden Erfindung liegt daher die Aufgabe zugrunde, einen Relativdrucksensor zu schaffen, welcher die oben erläuterten Nachteile nicht besitzt, insbesondere gegenüber Verschmutzungen durch äußere Einflüsse unempfindlich ist und relativ geringe Druckunterschiede zwischen Prozeßdruck und Referenzdruck zu detektieren vermag.

Gemäß vorliegender Erfindung wird diese Aufgabe nach dem Anspruch 1 gelöst.

Bei der erfindungsgemäßen Anordnung sind zwei an sich bekannte Relativdrucksensoren vorgesehen, von welchen einer der Messung des Prozeßdruckes und der andere der Messung des Referenzdruckes dient, wobei die unabhängig voneinander mit Wandlern in elektrische Größen umgewandelten Meßwerte mittels einer elektronischen Schaltung weiterverarbeitet und schließlich zur Berechnung des Relativdruckes, also der Druckdifferenz zwischen Prozeßdruck und Referenzdruck, miteinander verglichen werden. Anders als bei der oben beschriebenen Anordnung zweier Absolutdrucksensoren sind bei der erfindungsgemäßen Anordnung die gasgefüllten Kammern der beiden Sensoren über eine Druckleitung miteinander verbunden. Diese Anordnung ähnelt zwar äußerlich dem Differenzdrucksensor nach EP 0 111 348 B1, hat jedoch eine völlig andere Arbeitsweise. Da die Kammern gasgefüllt sind, sind anders als bei flüssigkeitsgefüllten Kammern die Membranbewegungen weitgehend voneinander entkoppelt. Insbesondere wenn das Volumen der miteinander verbundenen Kammern hinreichend groß ist, findet keine Koppelung statt. Bei dieser Anordnung und Bemessung wird mit dem einen Sensor ausschließlich der Prozeßdruck bezogen auf den Meßkammerdruck und mit dem anderen Sensor ausschließlich der Referenzdruck bezogen auf den Meßkammerdruck gemessen und in entsprechende elektrische Meßgrößen umgewandelt, welche nach erfolgter Verstärkung in einer elektronischen Schaltung zur Ermittlung einer Meßgröße verknüpft werden, welche der Druckdifferenz zwischen Prozeßdruck und Referenzdruck entspricht. Wie in der Figurenbeschreibung noch erläutert ist, geht hierbei der Meßkammerdruck nicht in das Meßergebnis ein. Die die beiden Kammern miteinander verbindende Druckleitung sorgt lediglich dafür, daß in Meßkammer und Referenzdruckkammer gleiche Drücke und Temperaturen herrschen.

Der entscheidende Vorteil dieses in bezug auf die Messung des Relativdruckes empfindlichen Relativdrucksensors ist, daß beide Meßkammern mit ihren jeweiligen Meßwandlern nach außen hermetisch gekapselt sind und damit keine Verunreinigungen eindringen können, welche die Langzeitstabilität negativ beeinflussen würden.

Es ist, wie mit Anspruch 2 angegeben, empfehlenswert, die miteinander verbundenen Kammern mit einem chemisch neutralen Gas zu füllen. Da der Gasdruck in das Meßergebnis nicht eingeht, kann er in weiten Grenzen, beispielsweise zwischen 1 mbar und 100 bar variieren, wie mit Anspruch 3 angegeben ist. Man kann darum den Kammerdruck so wählen, daß die Relativdrucksensoren in einem optimalen Druckbereich betrieben werden. Die Tatsache, daß der Kammerdruck nicht die Meßgröße für den Relativdruck beeinflußt, ist insoweit von besonderem Vorteil, als der Kammerdruck nicht konstant ist, sondern sich z.B. in Abhängigkeit von der Außentemperatur verändert. Auch bewirken die Auslenkungen der Membranen eine kleine Volumens- und damit Kammerdruckänderung.

Da die von den Wandlern erzeugten Meßgrößen gesondert in elektrischen Schaltungen weiterverarbeitet werden, müssen die beiden Drucksensoren auch nicht identischer Bauart sein bzw. identische Meßwandler aufweisen. Als Meßwandler eignen sich, wie mit Anspruch 5 angegeben, optische, kapazitive induktive oder ohmsche Wandler. Bei Verwendung unterschiedlicher Wandler muß nur sichergestellt sein, daß die elektrischen Meßgrößen sich im gleichen Verhältnis, möglichst proportional, mit dem Druck, also dem Prozeßdruck einerseits und dem Referenzdruck andererseits, ändern. Der Einsatz unterschiedlicher Relativdrucksensoren bzw. Wandler kann sogar je nach Einsatzgebiet von Vorteil sein (Anspruch 6).

Die mit Anspruch 7 vorgeschlagene räumliche Trennung von Meßkammer zur Messung des Prozeßdruckes und Referenzdruckkammer zur Messung des Referenzdruckes ist dann vorteilhaft, wenn Prozeßmedium und Referenzmedium sich an unterschiedlichen Orten befinden. Bei dieser räumlichen Trennung wirken sich allerdings unterschiedliche Temperatureinflüsse auf beide Sensoren stärker aus, was zu einer Verfälschung des Meßergebnisses führt. Um derartige Temperatureinflüsse klein zu halten, müßten beide Sensoren exakt temperaturkompensiert sein, was sich in der Praxis nicht oder nur mit großem Aufwand realisieren läßt.

In vielen Fällen ist es darum vorteilhafter, beide Sensoren konstruktiv miteinander zu kombinieren, wie mit Anspruch 8 angegeben ist. Abgesehen von dem oben erläuterten Vorteil ist eine derart kompakte Anordnung auch preisgünstiger. Eine weitere Kostensenkung läßt sich bei dieser Anordnung dadurch erzielen, daß bei räumlich konzentrierter Anordnung der Drucksensoren eine gemeinsame elektronische Schaltung zur Meßwertauswertung verwendet werden kann, was gleichfalls kostengünstiger ist als die Verwendung zweier separater Schaltungen für jedes Sensorsystem.

Konstruktive Einzelheiten eines derartigen kompakten Relativdrucksensors sind mit den weiteren Unteransprüchen 9 bis 15 angegeben.

Nach Anspruch 9 ist für die Membranen und die gemeinsame Trägerplatte ein isolierender Werkstoff, vorzugsweise Keramik oder Quarz, vorgeschlagen, wobei die Verbindung der Membranen mit der gemeinsamen mittleren Trägerplatte über isolierende Glaslotringe erfolgen kann. Um Druckstöße von der Membran fernzuhalten, können Stützringe gemäß Anspruch 10 vorgesehen sein.

Soweit kapazitive Wandler verwendet werden, werden Kondensatoranordnungen nach den Ansprüchen 11 bis 14 vorgeschlagen.

Zum Anschluß der Kondensatorbeläge können Durchführungskontakte gemäß Anspruch 15 vorgesehen sein, welche die mittlere Trägerplatte, und/oder die Membranen und/oder die Glaslotringe durchsetzen und vorzugsweise im äußeren Randbereich der referenzdruckseitigen Membran enden, so daß ein einseitiger Anschluß des Sensors an ein Zuleitungskabel möglich ist.

Der Gegenstand der Erfindung ist nachstehend anhand von Ausführungsbeispielen, die in den Zeichnungen schematisch veranschaulicht sind, im einzelnen erläutert. In den Zeichnungen zeigen :

Figur 1     ein erstes Ausführungsbeispiel des erfindungsgemäßen Relativdrucksensors in schematischer Schnittdarstellung mit zugehörigem Blockschaltbild,

Figur 2     ein zweites Ausführungsbeispiel des erfindungsgemäßen Relativdrucksensors in schematischer Schnittdarstellung und zugehörigem Blockschaltbild,

Figur 3     ein drittes Ausführungsbeispiel des erfindungsgemäßen Relativdrucksensors in Schnittdarstellung,

Figur 4     Ansicht in Richtung IV-IV in Figur 3,

Figur 5     Ansicht in Richtung V-V in Figur 3,

Figur 6     Ansicht in Richtung VI-VI in Figur 3,

Figur 7     Ansicht in Richtung VII-VII in Figur 3 und

Figur 8     Blockschaltbild der elektronischen Schaltung zur Verarbeitung der mittels des Relativdrucksensors nach den Figuren 3 bis 7 ermittelten Meßgrößen.

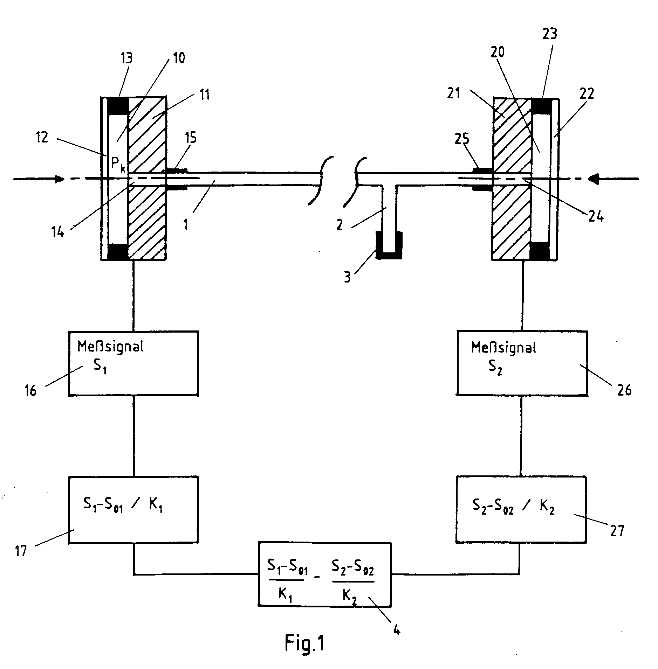

Anhand von Figur 1 sind Aufbau und Meßmethode des erfindungsgemäß ausgebildeten und beschalteten Relativdrucksensors erläutert.

Die Messung des Prozeßdruckes $P_p$ erfolgt mit einem Relativdrucksensor, der im wesentlichen aus einer Trägerplatte 11 und einer über einen dichtenden Abstandsring 13 an dieser angebrachten Druckmembran 12 besteht. Die Außenseite der Druckmembran ist dem Prozeßmedium zugewandt. Die von diesen Bauteilen begrenzte Meßkammer 10 ist gasgefüllt und über eine Druckleitung 1 mit einem zweiten Relativdrucksensor, dem Referenzdrucksensor, verbunden. Auch der Referenzdrucksensor besteht aus einer Trägerplatte 21, an welcher über einen dichtenden Abstandsring 23 eine Membran 22 angebracht ist und welche eine Meßkammer, nämlich die Referenzdruckkammer 20, aufweist. Wie die Zeichnung erkennen läßt, sind die Kammern 10, 20 über Bohrungen 14, 24 und Druckanschlüsse 15, 25 der Trägerplatten 11, 21 druckmäßig miteinander verbunden, gegenüber der äußeren Atmosphäre jedoch hermetisch gekapselt. Die Druckleitung 1 ist mit einem Druckanschluß 2 versehen, über den die miteinander verbundenen Kammern zunächst evakuiert und dann mit einem chemisch neutralen Gas, wie z.B. Stickstoff ($N_2$), trockener Luft oder Helium (He), gefüllt werden können. Nach der Befüllung ist das System mittels einer Kappe 3 oder dgl. verschließbar. Der in den Kammern herrschende Kammerdruck ($P_k$) des Neutralgases kann sehr unterschiedlich sein. In den meisten Fällen entspricht er dem auf die Membran 22 wirkenden Referenzdruck $P_{ref}$ des Referenzmediums, auf den der Prozeßdruck $P_p$ des Prozeßmediums bezogen wird. Die in den Zeichnungen nicht dargestellten, in den Kammern 10 und 20 vorgesehenen und mit den Membranen 12 bzw. 22 verbundenen Wandler erzeugen ein der jeweiligen Membranauslenkung proportionales Meßsignal $S_1$ bzw. $S_2$.

Es ergeben sich für die Ermittlung des Relativdruckes $P_{rel}$ folgende Zusammenhänge. Der Relativdrucksensor 10 bis 15, dessen Membran 12 dem Prozeßmedium zugewandt ist, erzeugt ein Meßsignal $S_1$, das der Druckdifferenz zwischen dem Prozeßdruck $P_p$ und dem Kammerdruck $P_k$ gemäß folgender Gleichung proportional ist

$$S_1 = S_{01} + K_1 (P_p - P_k) \qquad (1)$$

mit

$S_{01}$ : Nullpunktsignal

$K_1$ : Proportionalitätskonstante zwischen der auf die Membran wirkenden Druckdifferenz und dem Meßsignal $S_1$ für den Sensor 1.

Der Referenzdrucksensor 20 bis 25, auf dessen Membran 22 der Referenzdruck $P_{ref}$ wirkt, erzeugt ein Meßsignal $S_2$, das der Druckdifferenz zwischen dem Referenzdruck $P_{ref}$ und dem Kammerdruck $P_k$ nach folgender Formel proportional ist:

$$S_2 = S_{02} + K_2 (P_{ref} - P_k) \qquad (2)$$

mit

$S_{02}$: Nullpunktsignal

$K_2$ : Proportionalitätskonstante zwischen der auf die Membran wirkenden Druckdifferenz und dem Meßsignal $S_2$.

Der gesuchte Relativdruck ist die Differenz zwischen Prozeßdruck und Referenzdruck. Aus den Gleichungen (1) und (2) ergibt sich für die gesuchte Meßgröße Relativdruck folgender Zusammenhang :

$$S_3 = P_{rel} = P_p - P_{ref} = \frac{S_1 - S_{O1}}{K_1} - \frac{S_2 - S_{O2}}{K_2} \qquad (3)$$

Je nach verwendetem Meßprinzip sind die den Baugruppen 16 und 26 zugeführten Meßgrößen bzw. Meßsignale $S_1$ und $S_2$ Ströme oder Spannungen, welche in den Baugruppen 17 und 27 zur Berücksichtigung der Proportionalitätskonstanten umgeformt und in der Vergleicherschaltung 4 entsprechend der Gleichung (3) zur Bildung des dem Relativdruck entsprechenden Meßsignales $S_3$ miteinander verknüpft werden.

Wie die rechnerische Ableitung zeigt, geht in diese Meßgröße der Kammerdruck $P_k$ nicht ein, so daß dieser frei wählbar ist.

Entscheidender Vorteil dieser Anordnung ist, daß die Kammern 10 und 20 nach außen hin hermetisch gekapselt sind, so daß anders als bei bekannten Relativdrucksensoren keine Verunreinigungen eindringen können, was sich auf die Langzeitstabilität der Meßanordnung positiv auswirkt.

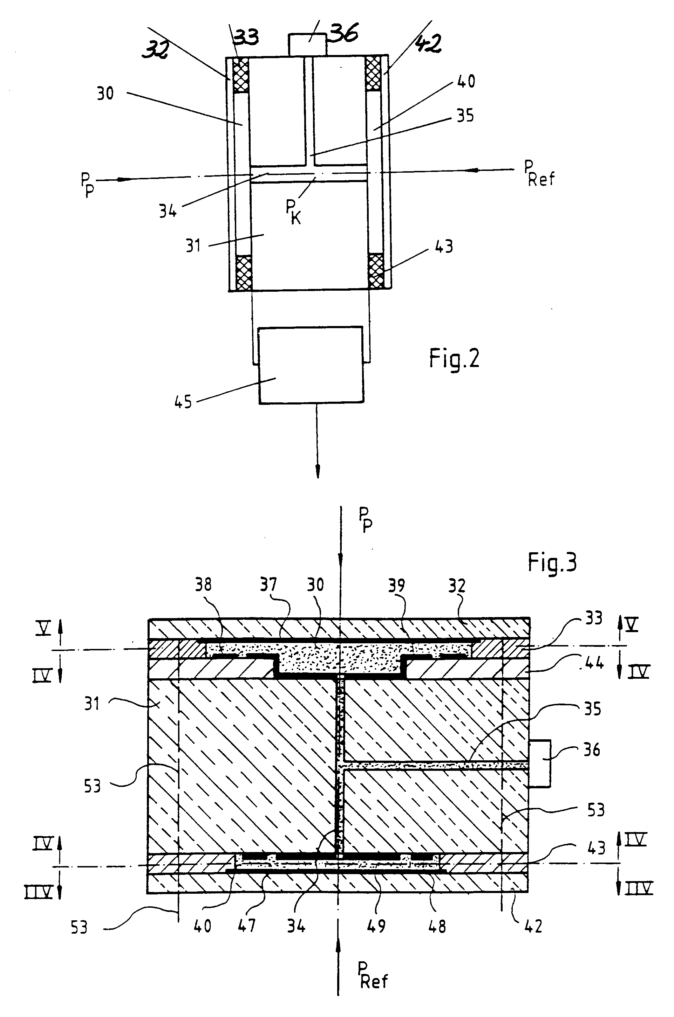

Eine anderer Variante des erfindungsgemäßen Relativdrucksensors ist in den weiteren Figuren 2 bis 8 veranschaulicht. Bei diesem Ausführungsbeispiel sind Prozeßdruck- und Referenzdrucksensor zu einem kompakten Bauteil kombiniert. Zu diesem Zweck sind beidseitig und parallel einer gemeinsamen Trägerplatte 31 aus gut wärmeleitfähigem Material zwei ebene Mambranplatten 32 und 42 vorgesehen, welche im Umfangsbereich mit Hilfe von Abstandsringen 33, 43 unter Bildung von jeweils einer dicht abgeschlossenen Kammer 30, 40 mit definiertem Abstand befestigt sind. Beide elastische Membranplatten können sich in bekannter Weise bei Druckbelastung durchbiegen, wobei sich an den Oberflächen mechanische Zug- und Druckspannungen ausbilden. Die Meßkammer 30 ist mit der Referenzdruckkammer 40 über eine die Trägerplatte 31 quer durchsetzende Bohrung 34 verbunden, so daß sich in beiden Kammern der gleiche Kammerdruck einstellt. Erforderlichenfalls können auch mehrere Bohrungen vorgesehen sein. Über eine weitere Bohrung 35, die mittels einer Kappe oder eines Ventils 36 verschließbar ist, können die Kammern zunächst evakuiert und dann mit einem chemisch neutralen Gas, wie z.B. Stickstoff ($N_2$) oder Helium (He) gefüllt werden, bis ein vorgegebener Kammerdruck $P_k$ erreicht ist.

Wie bei dem Ausführungsbeispiel gemäß Figur 1 werden die Membranauslenkungen mit in Figur 2 nicht dargestellten Wandlern in elektrische Signale umgeformt, die zur Ermittlung des Relativdruckes der elektrischen Schaltung 45 zugeführt werden.

Der genauere Aufbau des Relativdrucksensors, insbesondere der kapazitiven Wandler zur Umwandlung der Membranauslenkung in ein elektrisches Signal, ist aus den Figuren 3 bis 7 im einzelnen ersichtlich.

Bei diesem Sensor bestehen die gemeinsame Trägerplatte 31 und die Membranen 32 und 42 aus einem elektrisch isolierenden, aber gut wärmeleitfähigen Werkstoff, wie z.B. $Al_2O_3$-Keramik. Die Membranen 32 und 42 sind mit Hilfe von aus Glaslot bestehenden Abstandsringen 33 und 43 mit dem Trägerteil 31 bzw. einem dem Überlastschutz dienenden Stützring 44 verbunden. Die Wirkungsweise des als Überlastsicherung dienenden Stützringes 44 ist in EP 0 373 536 A2 im einzelnen beschrieben. Dieser Stützring 44 ist auf der vorzugsweise kreisförmigen Oberfläche der Trägerplatte 31 angebracht und trägt den Abstandsring 33. Auch Stützring 44 und Abstandsring 33 sind, wie die Trägerplatte 31 und die Membranen 32 und 42, elektrisch isolierend ausgeführt. Die Membran 32 begrenzt zusammen mit Abstandsring 33, Stützring 44 und Trägerplatte 31 eine flache Meßkammer 30' mit stufenförmigem Profil.

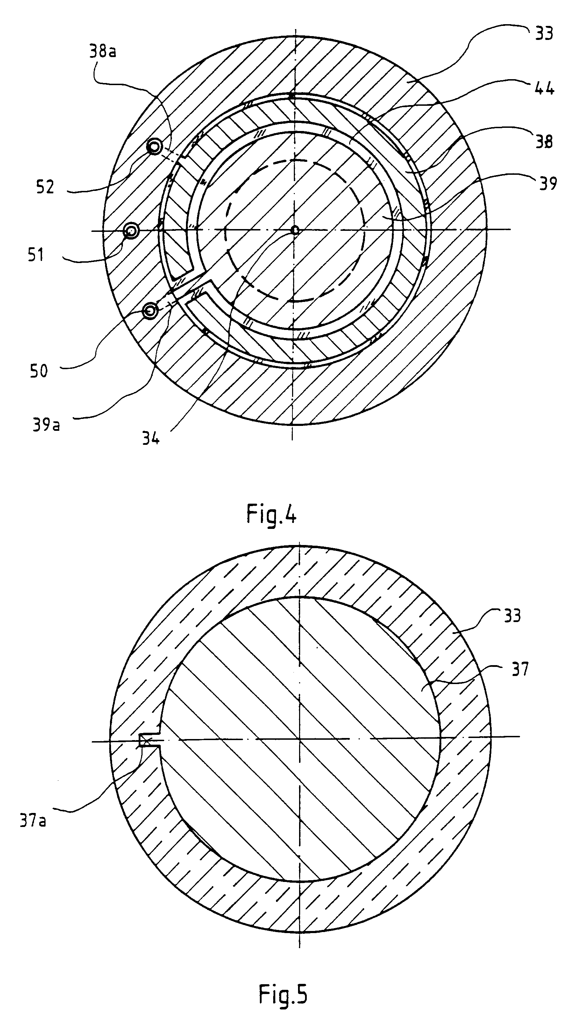

Zur Messung der druckabhängigen Durchbiegung der Membran 32, also zur Umwandlung der mechanischen Auslenkung in ein elektrisches Signal, sind in der Meßkammer zwei Kondensatoren angeordnet. Realisiert sind diese Kondensatoren durch eine gemeinsame, auf die Innenfläche der Membranplatte 32 aufgebrachte kreisförmige Schichtelektrode 37 sowie eine auf dem Stützring 44 im Randbereich angebrachte ringförmige Schichtelektrode 38 und eine konzentrisch zu dieser ringförmigen Elektrode vorgesehene topfförmige Elektrode 39, welche teilweise auf dem inneren Bereich des Stützringes 44 und auf der Oberfläche der Trägerplatte 31 aufgebracht ist. Die Schichtelektroden bestehen aus elektrisch leitfähigem Material und sind gegeneinander bei dieser Anordnung elektrisch isoliert. Die Elektrode 37 der Membran 32 bildet mit der ringförmigen Schichtelektrode 38 einen ersten Kondensator mit der Kapazität $C_{rp}$. Die Kapazität dieses als Referenzkondensator bezeichneten Kondensators ist wegen der Anordnung der ringförmigen Elektrode 38 im Randbereich, in welchem sich die Membran 32 unter Druckeinwirkung nur geringfügig verformt, wenig druckabhängig. Der zweite Kondensator ist aus der Schichtelektrode 37 und der im mittleren Bereich angeordneten topfförmigen Elektrode 39 gebildet. Da sich die Membran in diesem Bereich bei Druckeinwirkung relativ stark verformt, ist die Kapazität $C_{mp}$-dieses als Meßkondensator bezeichneten Kondensators stark druckabhängig. Die elektrischen Anschlüsse der Elektroden 37, 38 und 39 sind, wie die Ansichten in Figur 4 und 5 deutlich machen, durch schmale elektrisch leitende Stege 37a, 38a, 39a realisiert, welche mit Durchführungskontakten 50, 51 und 52 elektrisch verbunden sind. Diese stift- oder röhrchenförmigen Kontakte durchsetzen, wie in Figur 3 mit den gestrichelten Linien 53 angedeutet, die Membran 42, den Abstandsring 43, die Trägerplatte 53, den Stützring 44 und - teilweise jedenfalls - den Abstandsring 33. Sie enden auf der äußeren Fläche der Membran 42 und bilden den elektrischen Anschluß für die Kondensatoren.

In gleicher Weise ist der der Referenzdruckkammer 40 zugeordnete ordnete Wandler ausgebildet. Da für die Referenzdruckkammer in der Regel der Überlastsicherung dienende Stützringe nicht notwendig sind, ergibt sich eine etwas andere und einfachere Gestaltung der Kondensatorelektroden. Diese bestehen wie bei der Meßkammer aus einer gemeinsamen Schichtelektrode 47, die auf die Innenfläche der Membran 42 aufgebracht ist, einer ringförmigen Elektrode 48 und einer kreisflächenförmigen Elektrode 49, wobei die zuletzt genannten Elektroden im Abstand voneinander auf der der Referenzdruckkammer 40 zugewandten Oberfläche des Trägerteiles 31 vorgesehen sind. Wie bei der oben erläuterten Anordnung bilden die Elektroden 47 und 48 einen weitgehend druckunabhängigen Referenzkondensator, während die Elektroden 47 und 49 den vom Referenzdruck abhängigen Kondensator bilden.

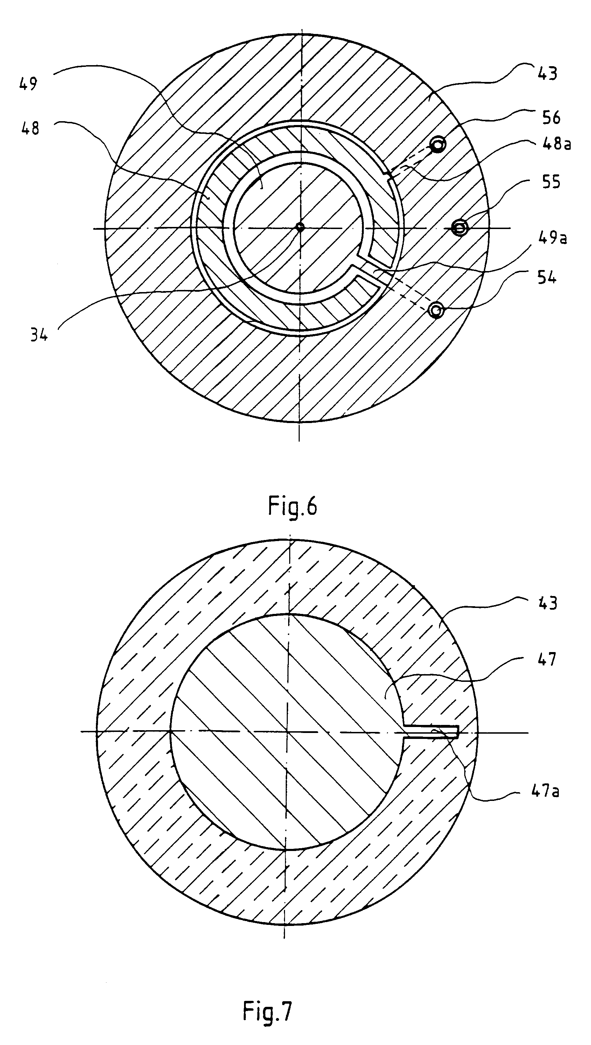

Der elektrische Anschluß der kapazitiven Schichtelektroden 47, 48 und 49 erfolgt gleichfalls über schmale elektrisch leitende Stege 47a, 48a und 49a, welche mit Durchführungskontakten 54, 55 und 56 elektrisch verbunden sind, wie mit den Ansichten gemäß Figur 6 und 7 veranschaulicht ist. Auch diese Kontakte sind entsprechend der gestrichelten Linie 53 in Figur 3 bis auf die Außenseiten der Membranplatte 42 geführt.

Die Kondensatorelektroden 37, 38, 39 und 47, 48, 49 können in bekannter Weise in Dickschichttechnik ausgeführt sein. Dies gilt auch für die Durchführungskontakte 50 bis 52 und 54 bis 56. Zu diesem Zweck sind anstelle von Kontaktstiften entsprechende Durchkontaktierungsbohrungen vorzusehen, wobei der Glaslotring 43 jeweils kreisförmig um die Durchkontaktierungsbohrung herum auszusparen ist.

Auch bei dem Ausführungsbeispiel gemäß Figur 3 sind die beiden Kammern 30' und 40 über mindestens eine Bohrung 34 in der Trägerplatte 53 miteinander verbunden. Über die weitere Querbohrung 35, die mittels einer Kappe 36 verschließbar ist, lassen sich die Kammern evakuieren und/oder mit einem neutralen Gas des gewünschten Kammerdruckes füllen.

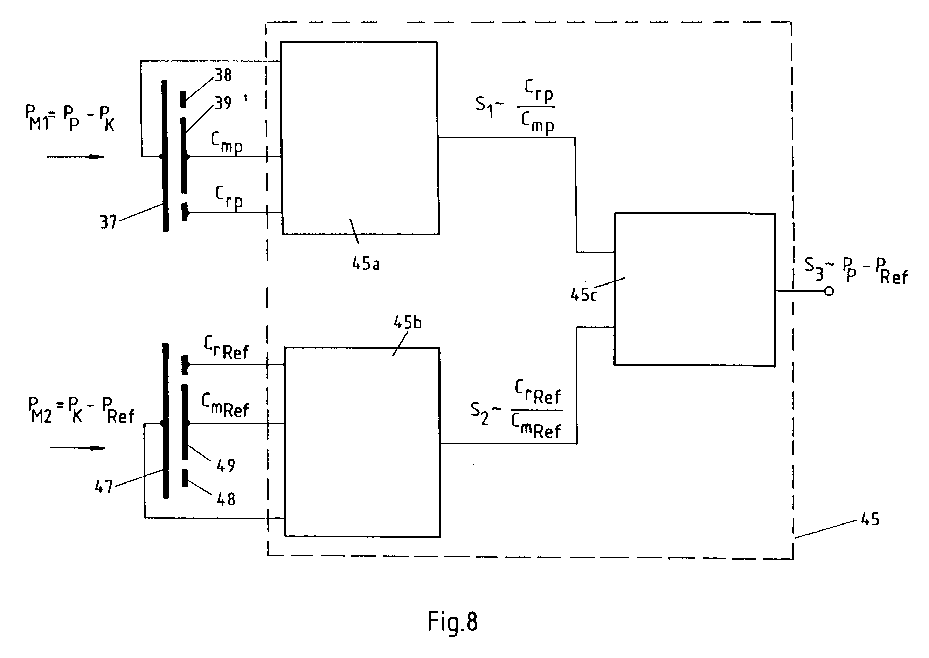

Das in Figur 8 wiedergegebene Blockschaltbild veranschaulicht die elektronische Signalauswertung.

Auf die Membran 30, an deren Innenseite die Schichtelektrode 37 befestigt ist, wirkt der Prozeßdruck $P_p$, welchem der Kammerdruck $P_k$ entgegenwirkt, so daß sich folgender resultierender Druck ergibt :

$$P_{M1} = P_p - P_k \qquad (4)$$

Mit zunehmendem Druck $P_{M1}$ wird die Membran 30 im wesentlichen in der Mitte nach Innen ausgelenkt, wodurch sich die Kapazität des aus den Schichtelektroden 37 und 39 gebildeten Mittenkondensators mit der Kapazität $C_{mP}$ stark und dagegen der aus den Schichtelektroden 37 und 38 gebildeten Referenzkondensator mit der Kapazität $C_{rP}$ nur wenig vergrößert. Mittels der Kapazitätsmeß- und Rechenschaltung 45a der elektronischen Schaltung 45 wird ein elektronisches Ausgangssignal $S_1$ erzeugt, das dem Verhältnis der Kapazität des Referenzkondensators und des Mittenkondensators direkt proportional ist. Es gilt also :

$$S_1 \sim \frac{C_{rP}}{C_{mP}} \qquad (5)$$

Dieses Signal ist in erster Näherung dem resultierenden Druck proportional, wobei gemäß Gleichung (1) wieder folgende Beziehung gilt :

$$S_1 = S_{01} + K_1 \times P_{M1} \qquad (6)$$

Entsprechende Zusammenhänge gelten für die Signalerzeugung mittels des Referenzdrucksensors. Auf die Membran 42, deren Innenseite die Schichtelektrode 47 trägt, wirkt der Differenzdruck zwischen Referenzdruck und Kammerdruck, so daß folgender Zusammenhang gilt :

$$P_{M2} = P_{ref} - P_k \qquad (7)$$

Die Kapazitätsmeß- und Rechenschaltung 45b der elektronischen Schaltung 45 in Figur 8 erfaßt in gleicher Weise wie oben erläutert die ϱÄnderungen des stark druckabhängigen Meßkondensators mit der Kapazität $C_{mRef}$ und liefert das Ausgangssignal $S_2$, das direkt proportional zu dem nachstehend angegebenen Kapazitätsverhältnis ist :

$$S_2 \sim \frac{C_{rRef}}{C_{mRef}} \qquad (8)$$

Hierbei entspricht der Kapazitätswert $C_{rRef}$ der Kapazität des Kondensators 47, 48 und der Kapazitätswert $C_{mRef}$ der Kapazität des Kondensators 47, 49.

Dieses Signal $S_2$ ist in erster Näherung proportional zu dem resultierenden Druck $P_{M2}$, so daß sich für das Signal $S_2$ gemäß Gleichung (2) wieder folgender Zusammenhang ergibt :

$$S_2 = S_{02} + K_2 \times P_{M2} \qquad (9)$$

Der gesuchte relative Druck ist die Differenz aus Prozeßdruck und Referenzdruck, also

$$P_{rel} = P_p - P_{ref} \qquad (10)$$

Aus den Beziehungen (4) und (7) ergibt sich für den Relativdruck die Beziehung :

$$P_{rel} = P_{M1} - P_{M2} \qquad (11)$$

Hieraus errechnet sich mit den Gleichungen (6) und (9) wieder die der Gleichung (3) entsprechende Beziehung :

$$P_{rel} = \frac{S_1 - S_{O1}}{K_1} - \frac{S_2 - S_{O2}}{K_2} \qquad (12)$$

Die Ausgänge der Schaltungen 45a und 45b liefern die Signale $S_1$ und $S_2$, welche in der Rechenschaltung 45c nach der Funktion (12) miteinander verknüpft werden, so daß die Rechenschaltung 45e das Ausgangssignal $S_3$ liefert, das dem Relativdruck, also der Differenz zwischen Prozeßdruck und Referenzdruck, nach folgender Beziehung direkt proportional ist :

$$S_3 \sim P_p - P_{Ref} \qquad (13)$$

Der anhand der Figuren 2 bis 8 erläuterte vollständig gekapselte Relativdrucksensor zeichnet sich durch große Überlastfestigkeit auf der Prozeßdruckseite und hohe Temperaturstabilität aus, wobei letztere einerseits auf die thermische Koppelung der Meßkammer 30' und der Referenzdruckkammer 40 und andererseits die Verwendung von Referenzkondensatoren im Randbereich der beiden Membranen zur Signalkorrektur zurückzuführen ist. Die vollständige Kapselung des mit chemisch neutralem Gas gefüllten Systems führt zur Erhöhung der Langzeitstabilität.

Ein wesentlicher Vorteil des erfindungsgemäßen Relativdrucksensors verglichen mit einem flüssigkeitsgekoppelten Einkammerdifferenzdrucksensor, wie er z.B. in EP 0 111 348 B1 beschrieben ist, besteht darin, daß der Kammerdruck $P_k$ sehr einfach eingestellt und an die jeweilige meßtechnische Aufgabe angepaßt werden kann. Z.B. entspricht sehr häufig der Referenzdruck dem atmosphärischen Umgebungsdruck von ca. 1013 mbar. In diesem Fall ist es zweckmäßig, als Kammerdruck $P_k$ bei Raumtemperatur von ca. 20° C 1013 mbar zu wählen. Die Druckbelastung der Membran 42, welche der Referenzdruckkammer 40 zugeordnet ist, ist in diesem Fall nicht sehr groß. Der Kammerdruck $P_k$ wirdbei großem Kammervolumen praktisch nur durch die Temperatur T nach folgendem Zusammenhang beeinflußt :

$$P_k(T) = P_k \ (T = 20°C) \cdot \frac{(T+273)}{293} \qquad (14)$$

In die Gleichung (14) ist die Temperatur T in ° C einzusetzen. Bei einer Temperaturerhöhung von 20° C auf 100° C ergibt sich eine Druckerhöhung von ca. 280 mbar, bei einer Temperaturabsenkung auf -20° C eine Druckminderung von -140 mbar. Berücksichtigt man zusätzlich die möglichen Schwankungen des atmosphärischen Umgebungsdruckes von ± 50 mbar, so wird die Membran 42 der Referenzdruckkammer im Extremfall mit einem Druck von + 330 mbar bzw. -190 mbar belastet.

Wird dagegen ein flüssigkeitsgekoppelter Einkammerdifferenzdrucksensor als Relativdrucksensor eingesetzt, so ist die dem atmosphärischen Umgebungsdruck ausgesetzte Membran wesentlich stärker belastet. Diese Membran muß einerseits wegen der Flüssigkeitskoppelung der Bewegung der prozeßdruckseitigen Membran und andererseits temperaturbedingten Ausdehnungen der Kammerflüssigkeit folgen.

**Patentansprüche**

1.  Relativdrucksensor, mit einer gasgefüllten Meßkammer, welche gegenüber einem Prozeßmedium mit einer druckempfindlichen Membran verschlossen ist, deren Auslenkung mit einem in der Meßkammer angeordneten Wandler in eine dem Prozeßdruck entsprechende elektrische Meßgröße umgewandelt wird, dadurch gekennzeichnet, daß die Meßkammer (10, 30, 30') über eine Druckleitung (1, 34) mit einer Referenzdruckkammer (20, 40) verbunden ist, daß die Kammern nach außen hermetisch abgekapselt sind, daß die druckempfindliche Membran (22, 42) der Referenzdruckkammer (20, 40) einem Referenzmedium zugewandt ist, wobei die Auslenkung der Membran (22, 42 mittels eines Meßwandlers in eine dem Referenzdruck ($P_{ref}$) entsprechende elektrische Meßgröße umgewandelt wird, und daß die dem Prozeßdruck ($P_p$) und dem Referenzdruck ($P_{ref}$) entsprechenden elektrischen Meßgrößen in einer elektrischen Vergleichsschaltung (4, 45, 45c) zur Ermittlung des Relativdrucks ($P_{rel}$) nach folgen der Formel miteinander verknüpft werden

$$P_{rel} = P_p - P_{ref} = \frac{S_1 - S_{O1}}{K_1} - \frac{S_2 - S_{O2}}{K_2}$$

mit

$S_1$ : Meßgröße des der Meßkammer zugeordneten Meßwandlers

$S_{O1}$: Nullpunktsignal dieses Meßwandlers

$S_2$ : Meßgröße des der Referenzdruckkammer zugeordneten Meßwandlers

$S_{O2}$: Nullpunktsignal dieses Meßwandlers

$K_1$ : Proportionalitätskonstante für den der Meß-Kammer zugeordneten Druckwandler

$K_2$ : Proportionalitätskonstante für den der Referenzdruckkammer zugeordneten Wandler

2. Relativdrucksensor nach Anspruch 1, dadurch gekennzeichnet, daß die miteinander verbundenen Kammern (10, 20, 30, 30', 40) mit einem chemisch neutralen Gas, vorzugsweise mit trockener Luft, Stickstoff oder Helium, gefüllt sind.

3. Relativdrucksensor nach Anspruch 1 oder 2, dadurch gekennzeichnet, daß der Gasdruck in den Kammern (10, 20, 30, 30', 40) zwischen 1 mbar und 100 bar liegt.

4. Relativdrucksensor nach Anspruch 3, dadurch gekennzeichnet, daß der Gasdruck in den Kammern (10, 20, 30, 30', 40) bei einer Temperatur von 20 °C 1013 mbar beträgt.

5. Relativdrucksensor nach einem der Ansprüche 1 bis 4, dadurch gekennzeichnet, daß als Meßwandler optische, kapazitive, induktive oder ohmsche Wandler vorgesehen sind.

6. Relativdrucksensor nach Anspruch 5, dadurch gekennzeichnet, daß die Meßwandler der Meßkammer (10, 30, 30') und der Referenzdruckkammer (20, 40) unterschiedlicher Bauart sind.

7. Relativdrucksensor nach einem der Ansprüche 1 bis 6, dadurch gekennzeichnet, daß Meßkammer (10) und Referenzdruckkammer (20) räumlich getrennt angeordnet und nur über die Druckleitung (1) miteinander verbunden sind.

8. Relativdrucksensor nach einem der Ansprüche 1 bis 7, dadurch gekennzeichnet, daß als druckempfindliche Membranen auf beiden Seiten einer gemeinsamen Trägerplatte (31) elastisch verformbare Platten (32, 42) in einem definierten Abstand von der Trägerplatte (31) an deren Umfang gasdicht angebracht sind und daß die beiden sich jeweils zwischen der Membran (32, 42) und der Trägerplatte (31) befindlichen Kammern (30, 30', 40) über die Trägerplatte (31) durchsetzende Bohrungen (34) miteinander verbunden sind.

9. Relativdrucksensor nach Anspruch 8, dadurch gekennzeichnet, daß die beiden Membranen (32, 42) und die Trägerplatte (31) aus einem gut wärmeleitenden, elektrisch isolierenden Werkstoff, vorzugsweise $Al_2O_3$-Keramik, $ZrO_2$-Keramik, SiC-Keramik oder Quarz bestehen und die Membranen (32, 42) durch je einen elektrisch isolierenden Abstandsring, vorzugsweise einen Glaslotring (33, 43), mit der Trägerplatte (31) im Randbereich verbunden sind.

10. Relativdrucksensor nach Anspruch 8 oder 9, dadurch gekennzeichnet, daß sich auf den Membranen (32) bzw. auf den Oberflächen der Trägerplatte (31) Stützringe (44) befinden, die sich bis in den Randbereich erstrecken.

11. Relativdrucksensor nach einem der vorhergehenden Ansprüche, dadurch gekennzeichnet, daß zur kapazitiven Messung der druckproportionalen Membranauslenkungen Schichtelektroden (37, 38, 39; 47, 48, 49) auf den Innenflächen der Membranen (32, 42), auf der Oberfläche der Trägerplatte (31) bzw. auf den Stützringen (44) vorgesehen sind, welche paarweise jeweils einen die Meßgröße erzeugenden Kondensator bilden.

12. Relativdrucksensor nach Anspruch 11, dadurch gekennzeichnet, daß den Membranen (32, 42) jeweils zwei Kondensatoren (37/39, 37/38; 47/49, 47/48) zugeordnet sind, deren Kapazitäten unterschiedlich druckabhängig sind.

13. Relativdrucksensor nach Anspruch 12, dadurch gekennzeichnet, daß an der Trägerplatte (31) bzw. am Stützring (44) im Randbereich eine vorzugsweise ringförmige Schichtelektrode (38, 48) als Elektrode des weniger druckempfindlichen Kondensators und innerhalb dieser Elektrode im zentralen Bereich eine vorzugsweise kreis- oder topfförmige Schichtelektrode (39, 49) als Elektrode des stärker druckabhängigen Kondensators angeordnet sind.

14. Relativdrucksensor nach Anspruch 13, dadurch gekennzeichnet, daß die Kapazitäten der Kondensatoren (37/39, 37/38; 47/49, 47/48) unabhängig voneinander gemessen werden, worauf mittels elektronischer Schaltungen (45a, 45b) für beide Membranen (32, 42) jeweils druckproportionale Meßgrößen gebildet werden, welche proportional zum Kapazitätsverhältnis der jeweiligen Kondensatorpaare (37/39, 37/38; 47/49, 47/48) sind und in einer elektronischen Vergleichsschaltung (45e) zur Ermittlung der dem Relativdruck proportionalen Meßgröße verknüpft werden.

**15.** Relativdrucksensor nach einem der vorhergehenden Ansprüche 8 bis 14, dadurch gekennzeichnet, daß die elektrischen Anschlüsse (37a, 38a, 39a, 47a, 48a, 49a) der elektrisch leitenden Schichtelektrode (37, 38, 39, 47, 48, 49) mit Hilfe von Durchführungskontakten (50 - 56) in den äußeren Randbereich der referenzdruckseitigen Membran (42) geführt sind.

## Claims

**1.** A relative pressure sensor, having a gas-filled measurement chamber, which is sealed in relation to a process medium by a pressure-sensitive membrane, the excursion of which is converted with a transducer disposed in the measurement chamber into an electrical measured variable corresponding to the process pressure, **characterised in that** the measurement chamber (10, 30, 30') is connected via a pressure line (1, 34) with a reference pressure chamber (20, 40),

**in that** the chambers are hermetically sealed in relation to the outside,

**in that** the pressure-sensitive membrane (22, 42) of the reference pressure chamber (20, 40) is turned towards a reference medium, with the excursion of the membrane (22, 42) being converted by means of a transducer into an electrical measured variable corresponding to the reference pressure ($P_{ref}$),

**and in that** the electrical measured variables corresponding to the process pressure ($P_p$) and the reference pressure ($P_{ref}$) are connected to one another in an electric comparator circuit (4, 45, 45c) to determine the relative pressure ($P_{ref}$) according to the following formula

$$P_{rel} = P_p - P_{ref} = \frac{S_1 - S_{01}}{K_1} - \frac{S_2 - S_{02}}{K_2}$$

in which

$S_1$ : measured variable of the transducer associated with the measurement chamber

$S_{01}$ : zero point signal of this transducer

$S_2$ : measured variable of the transducer associated with the reference pressure chamber

$S_{02}$ : zero point signal of this transducer

$K_1$ : proportionality constant for the pressure transducer associated with the measurement chamber

$K_2$ : proportionality constant for the transducer associated with the reference pressure chamber

**2.** A relative pressure sensor according to Claim 1,
**characterised in that** the interconnected chambers (10, 20, 30, 30', 40) are filled with a chemically neutral gas, preferably with dry air, nitrogen or helium.

**3.** A relative pressure sensor according to Claim 1 or 2,
**characterised in that** the gas pressure in the chambers (10, 20, 30, 30', 40) lies between 1 mbar and 100 bar.

**4.** A relative pressure sensor according to Claim 3,
**characterised in that** the gas pressure in the chambers (10, 20, 30, 30', 40) is 1013 mbar at a temperature of 20°C.

**5.** A relative pressure sensor according to one of Claims 1 to 4,
**characterised in that** optical, capacitive, inductive or ohmic transducers are provided as transducers.

**6.** A relative pressure sensor according to Claim 5,
**characterised in that** the transducers for the measurement chambers (10, 30, 30') and for the reference pressure chambers (20, 40) are of a different design.

7. A relative pressure sensor according to one of Claims 1 to 6,
**characterised in that** the measurement chamber (10) and reference pressure chamber (20) are disposed so that they are spatially separated from one another and are only connected with one another via the pressure line (1).

8. A relative pressure sensor according to one of Claims 1 to 7,
**characterised in that** elastically deformable plates (32, 42) are mounted as pressure-sensitive membranes on both sides of a common support plate (31) in gas-tight manner at a defined distance from the support plate (31) on its circumference, and in that the two chambers (30, 30', 40) located respectively between the membrane (32, 42) and the support plate (31) are connected to one another via bores (34) passing through the support plate (31).

9. A relative pressure sensor according to Claim 8,
**characterised in that** the two membranes (32, 42) and the support plate (31) are made from a good heat-conducting, electrically isolating material, preferably $Al_2O_3$ ceramics, $ZrO_2$ ceramics, SiC ceramics or quartz and each membrane (32, 42) is connected by an electrically isolating spacer ring, preferably a glass soldering ring (33, 43) with the support plate (31) in the edge region.

10. A relative pressure sensor according to Claim 8 or 9,
**characterised in that** support rings (44), which extend right into the edge region, are situated on the membranes (32) and respectively on the surfaces of the support plate (31).

11. A relative pressure sensor according to one of the preceding Claims,
**characterised in that,** for the capacitive measurement of the pressure-proportional membrane excursions, laminated electrodes (37, 38, 39; 47, 48, 49) are provided on the inner faces of the membranes (32, 42), on the surface of the support plate (31) and respectively on the support rings (44), each pair of which forms a capacitor producing the measured variable.

12. A relative pressure sensor according to Claim 11,
**characterised in that** two capacitors (37/39, 37/38; 47/49, 47/48), the capacitances of which are pressure-controlled differently, are associated with the membranes (32, 42).

13. A relative pressure sensor according to Claim 12,
**characterised in that** a preferably annular laminated electrode (38, 48) is disposed at the support plate (31) or at the support ring (44) in the edge region as an electrode for the less pressure-controlled capacitor and a preferably circular or pot-shaped laminated electrode (39, 40) is disposed inside this electrode in the central region as the electrode for the more strongly pressure-controlled capacitor.

14. A relative pressure sensor according to Claim 13,
**characterised in that** the capacitances of the capacitors (37/39, 37/38; 47/49, 47/48) are measured independently of one another, whereupon pressure-proportional measured variables are formed by means of electronic circuits (45a, 45b) for both membranes (32, 42), which variables are proportional to the capacitance ratio of the respective pairs of capacitors (37/39, 37/38; 47/49, 47/48) and are connected in an electronic comparator circuit (45e) to determine the measured variable proportional to the relative pressure.

15. A relative pressure sensor according to one of the preceding Claims 8 to 14,
**characterised in that** the electrical connections (37a, 38a, 39a, 47a, 48a, 49a) of the electrically conductive laminated electrode (37, 38, 39, 47, 48, 49) are guided with the aid of feed-through contacts (50 - 56) into the outer edge region of the membrane (42) on the reference pressure side.

**Revendications**

1. Capteur de pression relative comprenant une chambre de mesure remplie de gaz, fermée par une membrane sensible à la pression, vis-à-vis du fluide de procédé, membrane dont le déplacement est converti en une grandeur électrique par un convertisseur, cette grandeur correspondant à la pression de procédé régnant dans la chambre de mesure, caractérisé en ce que la chambre de mesure (10, 30, 30') est reliée à une chambre de pression de référence (20, 40) par l'intermédiaire d'une conduite de pression (1, 34), les chambres étant encapsulées hermétiquement vis-à-vis de l'extérieur et la membrane sensible à la pression (22, 42) de la chambre de pression de référence (20, 40) est exposée à un fluide de référence, le déplacement de la membrane (22, 42) étant converti en une grandeur de mesure électrique correspondant à la pression de référence ($P_{ref}$) par un convertisseur de mesure, et les grandeurs de mesures électriques correspondant respectivement à la pression de procédé ($P_p$) et à la pression de référence ($P_{ref}$) étant combinées dans un circuit de comparaison électrique (4, 45, 45c) pour déterminer la pression relative ($P_{rel}$) par la formule suivante :

$$P_{rel} \; = \; P_p \; - \; P_{ref} \; = \; \frac{S_1 \; - \; S_{01}}{K_1} \; - \; \frac{S_2 \; - \; S_{02}}{K_2}$$

formule dans laquelle :

$S_1$ : Grandeur de mesure du convertisseur de mesure associé à la chambre de mesure,

$S_{01}$ : Signal du point zéro de ce convertisseur de mesure,

$S_2$ : Grandeur de mesure du convertisseur de mesure associé à la chambre de pression de référence,

$S_{02}$ : Signal de point zéro de ce convertisseur de mesure,

$K_1$ : Constante de proportionnalité du convertisseur de pression associé à la chambre de mesure,

$K_2$ : Constante de proportionnalité du convertisseur associé à la chambre de pression de référence.

2. Capteur de pression relative selon la revendication 1, caractérisé en ce que les chambres (10, 20, 30, 30', 40) reliées entre elles sont remplies d'un gaz chimiquement neutre de préférence d'air sec, d'azote ou d'hélium.

3. Capteur de pression relative selon la revendication 2, caractérisé en ce que la pression de gaz dans les chambres (10, 20, 30, 30', 40) est comprise entre 1 mbar et 100 bars.

4. Capteur de pression relative selon la revendication 3, caractérisé en ce que la pression du gaz dans les chambres (10, 20, 30, 30', 40) est de 1013 mbars à une température de 20°C.

5. Capteur de pression relative selon l'une des revendications 1 à 4, caractérisé en ce que le convertisseur de mesure est constitué par un convertisseur optique, capacitif, inductif ou ohmique.

6. Capteur de pression relative selon la revendication 5, caractérisé en ce que les convertisseurs de mesure de la chambre de mesure (10, 30, 30') et de la chambre de pression de référence (20, 40) sont de construction différente.

7. Capteur de pression relative selon l'une des revendications 1 à 6, caractérisé en ce que la chambre de mesure (10) et la chambre de pression de référence (20) sont séparées dans l'espace et ne sont reliées que par la conduite de pression (1).

8. Capteur de pression relative selon l'une des revendications 1 à 7, caractérisé en ce que les membranes sensibles à la pression, des deux côtés d'une plaque de support commune (31) sont des plaques (32, 42) élastiquement déformables situées à une distance déterminée de la plaque de support (31), en étant montées de manière imperméable au gaz au niveau de la périphérie et en ce que les deux chambres (30, 30', 40) qui se trouvent chaque fois entre le membrane (32, 42) et la plaque de support (31) sont reliées l'une à l'autre par des perçages (34) traversant la plaque de support (31).

9. Capteur de pression relative selon la revendication 8, caractérisé en ce que les deux membranes (32, 42) et la plaque de support (31) sont réalisées en un matériau non conducteur de chaleur, isolante électrique, de préférence une céramique $Al_2O_3$, une céramique $ZrO_2$, une céramique SiC ou du quartz et les membranes (32, 42) sont reliées dans la zone du bord par une bague d'écartement isolante électrique de préférence une bague de soudure de verre (33, 43) à la plaque de support (31).

10. Capteur de pression relative selon la revendication 8 ou 9, caractérisé en ce que des bagues d'appui (44) sont prévues sur les membranes (32) ou sur les surfaces supérieures des plaques de support (31), bagues qui s'étendent jusque dans la zone du bord.

11. Capteur de pression relative selon l'une des revendications précédentes, caractérisé en ce que pour la mesure capacitive des déplacements de la membrane, proportionnels à la pression, il y a des électrodes en couche (37, 38, 39 ; 47, 48, 49) sur la surface intérieure des membranes (32, 42), à la surface de la plaque de support (31) ou sur des bagues d'appui (44), et qui forment groupées par paires, chaque fois un condensateur générant une grandeur de mesure.

12. Capteur de pression relative selon la revendication 11, caractérisé en ce qu'aux membranes (32, 42) sont associés chaque fois deux condensateurs (37/39, 37/38 ; 47/49, 47/48), dont les capacités dépendent différemment de la pression.

13. Capteur de pression relative selon la revendication 1, caractérisé en ce que sur la plaque de support (31) ou la bague d'appui (44), dans la zone du bord il y a de préférence une électrode en couche (38, 48), annulaire formant l'électrode du condensateur le moins sensible à la pression et à l'intérieur de cette électrode, dans la zone centrale il y a une électrode en couche (39, 49) de préférence en forme de cercle ou de pot, comme électrode correspondant au condensateur le plus fortement dépendant de la pression.

14. Capteur de pression relative selon la revendication 13, caractérisé en ce que les capacités des condensateurs (37/39, 37/38 ; 47/49, 47/48) sont mesurées de manière indépendante et à l'aide des circuits électroniques (45a, 45b) pour les deux membranes (32, 42) on forme chaque fois des grandeurs de mesure proportionnelles à la pression, et qui sont proportionnelles aux rapports des capacités des paires de condensateurs respectives (37/39, 37/38 ; 47/49, 47/48), et sont combinées dans un circuit de comparaison électronique (45e) pour déterminer la grandeur de mesure proportionnelle à la pression relative.

15. Capteur de pression relative selon l'une des revendications 8 à 14, caractérisé en ce que les branchements électriques (37a, 38a, 39a, 47a, 48a, 49a) des électrodes en couche conductrices d'électricité (37, 38, 39, 47, 48, 49) sont conduites dans la zone du bord extérieur de la membrane (42) du côté de la pression de référence par des contacts de passage (50 - 56).

Fig.1

Fig.2

Fig.3

Fig.4

Fig.5

Fig.6

Fig.7

Fig.8

EP 0 524 550 B1